# EUROPÄISCHE PATENTSCHRIFT

(11) **EP 4 406 732 B1**
(45) Veröffentlichungstag und Bekanntmachung des Hinweises auf die Patenterteilung: **12.11.2025**
(21) Anmeldenummer: 24150709.4
(22) Anmeldetag: 08.01.2024
(51) Int. Cl.: B29D 30/28, B29D 30/20, B29D 30/24

(54) **VERFAHREN ZUR HERSTELLUNG EINES LUFTREIFENS**
METHOD OF MANUFACTURING A PNEUMATIC TIRE
PROCÉDÉ DE FABRICATION D'UN PNEUMATIQUE

(30) Priorität: 24.01.2023 DE 102023200546
(43) Veröffentlichungstag der Anmeldung: 31.07.2024
(73) Patentinhaber: Continental Reifen Deutschland GmbH, 30175 Hannover (DE)
(72) Erfinder: Knull, Stephan, 30175 Hannover (DE); Mauruschat, Rainer, 30175 Hannover (DE)
(74) Vertreter: Continental Corporation

(56) Entgegenhaltungen:
- EP-A1- 2 465 669
- WO-A1-2005/097478
- DE-A1- 2 806 572

## Beschreibung

Die Erfindung betrifft ein Verfahren sowie eine Vorrichtung zur Herstellung eines Luftreifens mit einer Innenschicht, einer Karkasslage, einem Wulstkern, einem Reifengürtel und einem Laufstreifen, wobei während des Reifenaufbaus ein auf dem Umfang der Reifenbautrommel besonders gleichmäßiger Abstand zwischen der Innenschicht und der Karkasslage zur Trommelschulter erzeugt wird.

Beim zweistufigen Reifenfertigungsverfahren wird beim Aufbau eines Luftreifens nach dem Aufwickeln einer Innenschicht und einer Karkasslage beispielsweise durch die Expansion der Karkasstrommel eine Schulter ausgebildet. Vor dem Hochschlagen der Innenschicht und der Karkasslage wird ein Wulstkern gesetzt.

Für die Gleichförmigkeit eines Reifens ist es relevant, dass die Innenschicht sowie die Karkasslage über den Umfang gesehen zwischen den Wulstkernen geringe Längenunterschiede aufweisen. Die Gleichförmigkeitsanforderungen an Reifen steigen, wobei die Längenunterschiede der Innenschicht sowie der Karkasslage zwischen den Wulstkernen bei gleichbleibenden Prozessen aufgrund von Karkasslagen mit höherer Steifigkeit ansteigen. Bekannte Verfahren und Vorrichtungen erzeugen daher bei hohen Gleichförmigkeitsanforderung an den Reifen, insbesondere bei Verwendung von Karkasslagen mit hohen Steifigkeiten, erhöhten Ausschuss oder sind besonders aufwendig, wodurch die Zykluszeit ansteigt und die Wirtschaftlichkeit des Verfahrens sinkt.

Die Patentschrift EP 2 465 669 A1 offenbart ein Verfahren zur Herstellung eines Luftreifens mit einer Innenschicht, einer Karkasslage, einem Wulstkern, einem Reifengürtel und einem Laufstreifen.

Vor diesem Hintergrund liegt der Erfindung die Aufgabe zugrunde, ein Verfahren und eine Vorrichtung derart auszuführen, dass ohne oder zumindest mit nur einer geringen Zykluszeiterhöhung prozesssicher Luftreifen mit einer Innenschicht sowie einer Karkasslage herstellbar sind, die über den Umfang gesehen zwischen den Wulstkernen besonders geringe Längenunterschiede aufweisen, um hohe Gleichförmigkeitsanforderungen an Luftreifen zuverlässig zu erfüllen.

Diese Aufgabe wird gelöst mit einem Verfahren gemäß den Merkmalen des Patentanspruches 1 sowie einer Vorrichtung gemäß dem nebengeordneten Anspruch. Die Unteransprüche betreffen besonders zweckmäßige Weiterbildungen der Erfindung.

Erfindungsgemäß ist also eine Verfahren zur Herstellung eines Luftreifens mit einer Innenschicht, einer Karkasslage, einem Wulstkern, einem Reifengürtel und einem Laufstreifen mit den folgenden Schritten vorgesehen:
a) Auflegen der Innenschicht und der Karkasslage auf eine Reifenbautrommel und auf einen Unterstützungsring mit Balg,
b) Ausbilden von Reifenschultern durch Expandieren der Reifenaufbautrommel,
c) Vergleichmäßigen des Abstandes der Innenschicht und der Karkasslage zur Trommelschulter durch Überstreichen des Schulterbereichs der Karkasslage mit Fingerblechen,
d) Setzen eines Wulstkerns an der Karkasslage an der Trommelschulter,
e) Fixieren des Wulstkerns mit einer radial verfahrbaren Kernfixierung,
f) Umschlagen der Karkasslage und der Innenschicht um den Wulstkern durch ein Befüllen eines Balgs,
g) Fertigstellen des Reifenrohlings mit weiteren Schritten.

Durch das Überstreichen der Innenschicht und der Karkasslage im Bereich der ausgebildeten Reifenschultern mit Fingerblechen, wobei das Überstreichen auf dem Umfang der Reifenbautrommel vorgenommen wird, wird die Innenschicht und die Karkasslage an die Reifenbautrommel vergleichmäßigt und die Längenvarianz zwischen den Wulstkernen verringert. Dies wird durchgeführt bevor der Wulstkern an die Karkasslage gesetzt wird, da andererseits eine Verringerung der Längenvarianz erschwert würde.

Die Fingerbleche können aus einem Metall aber auch aus nichtmetallischen Werkstoffen bestehen, die eine geeignete Flexibilität aufweisen.

Unter dem Fixieren des Wulstkerns mit einer radial verfahrbaren Kernfixierung wird das Verfahren eines Halteelements, das insbesondere kein Balg ist, verstanden.

Eine bevorzugte Ausführungsform sieht vor, dass das Vergleichmäßigen des Abstandes der Innenschicht und der Karkasslage zur Trommelschulter zumindest in Teilbereichen der Innenschicht ein Verkleinern des Abstandes zwischen der Innenschicht und der Karkasslage zur Trommelschulter ist. Ein Vergleichmäßigen durch ein Verkleinern des Abstandes, insbesondere durch ein Anlegen der Innenschicht und der Karkasslage an die Trommelschulter, hat sich als eine besonders einfache und prozesssichere Art des Vergleichmäßigen herausgestellt.

Eine weitere bevorzugte Ausführungsform sieht vor, dass die Fingerbleche axial an den radial äußeren Schulterbereich der Karkasslage gefahren werden und die Fingerbleche folgend im Kontaktbereich mit der Karkasslage in radialer Richtung auf einen kleineren Durchmesser verfahren werden, wobei das radiale Verfahren bevorzugt durch einen Wulstkernsetzer angetrieben wird. Diese Ausführungsform hat sich als effektiv sowie zuverlässig herausgestellt, wobei sie in besonders einfacher Form realisierbar ist, da hierzu kein zusätzlicher Antrieb benötigt wird, wenn die Fingerbleche mit den Wulstkernsetzern gekoppelt sind. Auch die Zykluszeit wird nicht oder zumindest nicht relevant erhöht.

Eine weitere bevorzugte Ausführungsform sieht vor, dass die Fingerbleche synchron verfahren werden. Durch ein synchrones Verfahren der Fingerbleche wird besonders zuverlässig eine geringe Längenvarianz der Karkasslage ermöglicht.

Eine weitere bevorzugte Ausführungsform sieht vor, dass das Fixieren des Wulstkerns mit einer radial verfahrbaren Kernfixierung durch ein Verfahren von einer Vielzahl von zumindest vier bevorzugt von zumindest acht auf den Umfang verteilten formstabilen Fixierungsmitteln erzeugt wird, wobei die Fixierungsmittel bevorzugt durch einen elektrischen oder einen hydraulischen oder einen pneumatischen Antrieb, bevorzugt unter Verwendung einer mechanischen Übersetzung, verfahren werden. Es hat sich gezeigt, dass durch formstabile Fixierungsmittel eine besonders positionsgenaue Fixierung des Wulstkerns erreicht wird, wodurch eine besonders hohe Reifenuniformität erreicht wird. Eine höhere Anzahl von Fixierungsmitteln erhöht die Genauigkeit mit der die Wulstkerne positioniert werden.

Erfindungsgemäß ist eine Vorrichtung, insbesondere zum Ausführen des erfindungsgemäßen Verfahrens, vorgesehen, aufweisend eine expandierbare Reifenbautrommel sowie ein axial zur Reifenbautrommel angeordneten Unterstützungsring mit einem Balg. Am Unterstützungsring ist eine Kernfixierung zum balglosen Fixieren eines Wulstkerns an einer Karkasslage angeordnet. Die Vorrichtung weist zum Vergleichmäßigen des Abstandes der Innenschicht und der Karkasslage zur Trommelschulter Fingerbleche auf, die zwischen einem Wulstkernsetzer und dem Balg am Unterstützungsring verfahrbar sind.

Durch die Fingerbleche kann die Innenschicht und die Karkasslage im Bereich der ausgebildeten Reifenschultern hinsichtlich ihrer Länge zwischen den Wulstkernen auf dem Umfang der Reifenbautrommel vereinheitlicht werden. Durch das balglose Fixieren des Wulstkerns kann die Vereinheitlichung der Länge bei fixierten Wulstkernen vor dem Erzeugen eines Karkassumschlags durchgeführt werden, wodurch eine Verringerung der Längenvarianz in einfacher Form möglich ist.

Eine bevorzugte Ausführungsform sieht vor, dass die Fingerbleche zumindest in Teilbereichen axial und radial verfahrbar gelagert sind. Durch die axiale und radiale Verfahrbarkeit der Fingerbleche können diese in axialer Richtung an die Trommelschulter verfahren werden und anschließend in radialer Richtung über die Karkasslage streichen.

Eine weitere bevorzugte Ausführungsform sieht vor, dass die Fingerbleche auf den ganzen Umfang verteilt sind und sich bevorzugt einander in Umfangsrichtung überlappen. Eine Verteilung auf den gesamten Umfang, insbesondere bei einer Überlappung in Umfangsrichtung führt zuverlässig zu besonders geringen Längenvarianzen der Karkasslage und der Innenschicht.

Eine weitere bevorzugte Ausführungsform sieht vor, dass die Fingerbleche mechanisch miteinander und bevorzugt mechanisch mit dem Wulstkernsetzer gekoppelt sind. Eine Kopplung der Fingerbleche führt in einfacher Form zu einer einheitlichen Bewegung der Fingerbleche und somit zu einer geringen Längenvarianz. Eine Kopplung der Fingerbleche mit dem Wulstkernsetzer hat sich als besonders einfach realisierbare Möglichkeit erwiesen die Fingerbleche zu verfahren.

Eine weitere bevorzugte Ausführungsform sieht vor, dass die Kernfixierung aus einer Vielzahl von zumindest vier bevorzugt von zumindest acht auf den Umfang verteilten formstabilen Fixierungsmitteln ausgebildet ist, wobei die Fixierungsmittel bevorzugt durch einen elektrischen oder einen hydraulischen oder einen pneumatischen Antrieb, bevorzugt unter Verwendung einer mechanischen Übersetzung, antreibbar sind. Es hat sich gezeigt, dass durch formstabile Fixierungsmittel eine besonders positionsgenaue Fixierung des Wulstkerns erreicht wird, wodurch eine besonders hohe Reifenuniformität erreicht wird. Eine höhere Anzahl von Fixierungsmitteln erhöht die Genauigkeit, mit der die Wulstkerne positioniert werden.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigen in
Fig. 1 eine nicht expandierte Reifenbautrommel mit axial zur Reifenbautrommel angeordneten Unterstützungsringen mit Bälgen;
Fig. 2 die expandierte Reifenbautrommel mit einem Wulstkernsetzer und Fingerblechen;
Fig. 3 die expandierte Reifenbautrommel beim Setzen eines Wulstkerns;
Fig. 4 die expandierte Reifenbautrommel mit umschlagener Karkasslage.

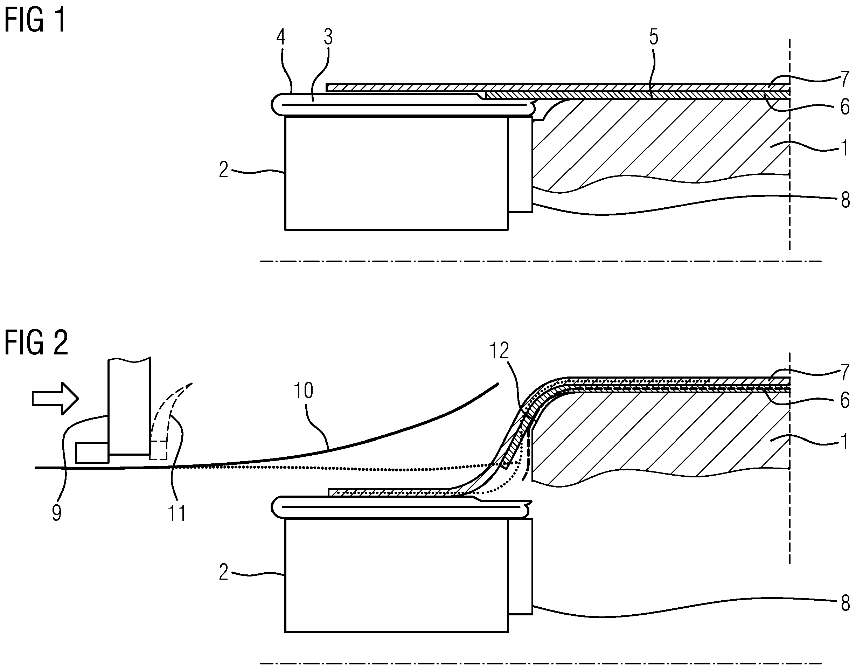

Figur 1 zeigt schematisch eine expandierbare Reifenbautrommel 1 in einem nicht expandierten Zustand, wobei die gestrichelte und die gestrichpunktete Linie für Symmetrieachsen stehen. **In** axialer Richtung der Reifenbautrommel 1 ist beidseits jeweils ein Unterstützungsring 2 mit einem Balg 3 angeordnet, wobei sich die Balgoberfläche 4 auf dem gleichen Durchmesser befindet wie die Reifenbautrommeloberfläche 5. Auf der Reifenbautrommel 1 sowie auf dem Balg 3 sind eine Innenschicht 6 sowie eine Karkasslage 7 aufgelegt. Der Unterstützungsring 2 weist eine Kernfixierung 8 auf, die aus acht jeweils radial verfahrbaren metallischen Elementen besteht, die mittels Pneumatikzylindern angetrieben werden.

In Figur 2 ist die gleiche expandierbare Reifenbautrommel wie in Figur 1, jedoch im expandierten Zustand zusammen mit einem Wulstkernsetzer 9 und Fingerblechen 10, dargestellt. Der Wulstkernsetzer 9 befördert den Wulstkern 11 in axialer Richtung zur Trommelschulter 12, wobei durch die Bewegung des Wulstkernsetzers 9 die an der Karkasslage 7 anliegenden Enden der Fingerbleche 10 radial nach innen verfahren werden und dabei die Karkasslage 7 sowie die Innenschicht 6 an die Trommelschulter 12 verfahren. Die Positionen der Fingerbleche 10 sowie der Karkasslage 7 und der Innenschicht 6 am Ende des Teilprozesses sind durch die gepunkteten und gestrichelten Linien angedeutet.

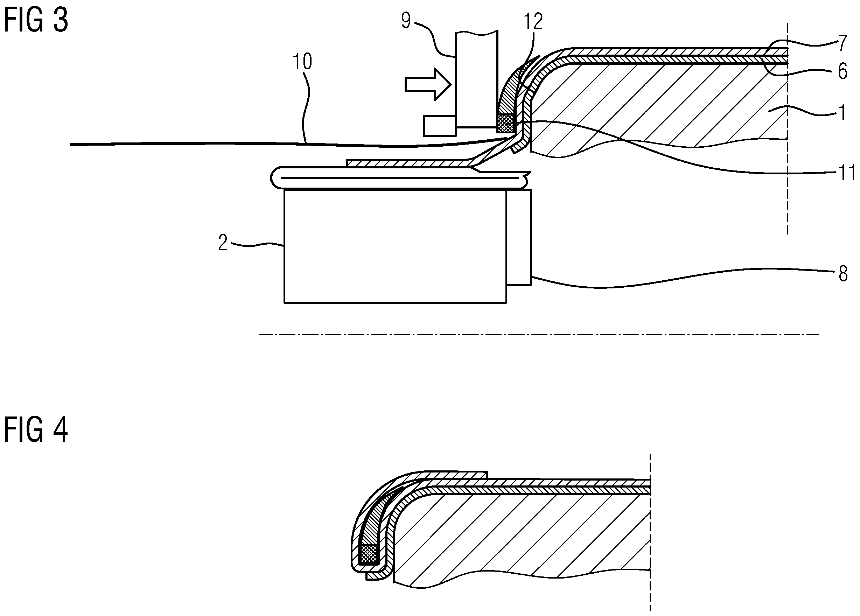

In Figur 3 ist die gleiche expandierbare Reifenbautrommel wie in Figur 1, jedoch im expandierten Zustand beim Setzen des Wulstkerns 11, dargestellt. Die Fingerbleche 10 sind durch die Bewegung des Wulstkernsetzers 9 nach radial Innen verfahren worden. Die Karkasslage 7 und die Innenschicht 6 wurden an die Trommelschulter angelegt. Bevor der Wulstkernsetzer 9 den Wulstkern 11 frei gibt, verfährt die Kernfixierung 8 nach radial außen und fixiert den Wulstkern 11.

Nachdem der Wulstkernsetzer 9 den Wulstkern 11 freigegeben hat, werden die Bälge 3 zum Ausbilden eines Karkassumschlags befüllt, so dass ein Karkassumschlag erzeugt wird, wie er in der Figur 4 dargestellt ist.

### Bezugszeichenliste

- 1: Reifenbautrommel
- 2: Unterstützungsring
- 3: Balg
- 4: Balgoberfläche
- 5: Reifenbautrommeloberfläche

- 6: Innenschicht
- 7: Karkasslage
- 8: Kernfixierung
- 9: Wulstkernsetzer
- 10: Fingerbleche

- 11: Wulstkern
- 12: Trommelschulter

## Patentansprüche

1. Verfahren zur Herstellung eines Luftreifens mit einer Innenschicht (6), einer Karkasslage (7), einem Wulstkern (11), einem Reifengürtel und einem Laufstreifen mit den folgenden Schritten:
a) Auflegen der Innenschicht (6) und der Karkasslage (7) auf eine Reifenbautrommel (1) und auf einen Unterstützungsring (2) mit Balg (3),
b) Ausbilden von Reifenschultern durch Expandieren der Reifenaufbautrommel (1),
c) Vergleichmäßigen des Abstandes der Innenschicht (6) und der Karkasslage (7) zur Trommelschulter (12) durch Überstreichen des Schulterbereichs der Karkasslage (7) mit Fingerblechen (10),
d) Setzen eines Wulstkerns (11) an der Karkasslage (7) an der Trommelschulter (12),
e) Fixieren des Wulstkerns (11) mit einer radial verfahrbaren Kernfixierung (8),
f) Umschlagen der Karkasslage (7) und der Innenschicht (6) um den Wulstkern (11) durch ein Befüllen eines Balgs (3),
g) Fertigstellen des Reifenrohlings mit weiteren Schritten.

2. Verfahren nach Anspruch 1, **dadurch gekennzeichnet, dass** das Vergleichmäßigen des Abstandes der Innenschicht (6) und der Karkasslage (7) zur Trommelschulter (12) zumindest in Teilbereichen der Innenschicht (6) ein Verkleinern des Abstandes zwischen der Innenschicht (6) und der Karkasslage (7) zur Trommelschulter (12) ist.

3. Verfahren nach den Ansprüchen 1 oder 2, **dadurch gekennzeichnet, dass** die Fingerbleche (10) axial an den radial äußeren Schulterbereich der Karkasslage (7) gefahren werden und die Fingerbleche (10) folgend im Kontaktbereich mit der Karkasslage (7) in radialer Richtung auf einen kleineren Durchmesser verfahren werden, wobei das radiale Verfahren bevorzugt durch einen Wulstkernsetzer (9) angetrieben wird.

4. Verfahren nach einem der vorangehenden Ansprüche, **dadurch gekennzeichnet, dass** die Fingerbleche (10) synchron verfahren werden.

5. Verfahren nach einem der vorangehenden Ansprüche, **dadurch gekennzeichnet, dass** das Fixieren des Wulstkerns (11) mit einer radial verfahrbaren Kernfixierung (8) durch ein Verfahren von einer Vielzahl von zumindest vier bevorzugt von zumindest acht auf den Umfang verteilten formstabilen Fixierungsmitteln erzeugt wird, wobei die Fixierungsmittel bevorzugt durch einen elektrischen oder einen hydraulischen oder einen pneumatischen Antrieb, bevorzugt unter Verwendung einer mechanischen Übersetzung, verfahren werden.

6. Vorrichtung zur Herstellung eines Luftreifens, insbesondere zum Ausführen eines Verfahrens nach einem der Ansprüche 1 bis 5, aufweisend eine expandierbare Reifenbautrommel (1) sowie ein axial zur Reifenbautrommel (1) angeordneten Unterstützungsring (2) mit einem Balg (3), wobei am Unterstützungsring (2) eine Kernfixierung (8) zum balglosen Fixieren eines Wulstkerns (11) an einer Karkasslage (7) angeordnet ist, **dadurch gekennzeichnet, dass** die Vorrichtung zum Vergleichmäßigen des Abstandes der Innenschicht (6) und der Karkasslage (7) zur Trommelschulter (12) Fingerbleche (10) aufweist, die zwischen einem Wulstkernsetzer (9) und dem Balg (3) am Unterstützungsring (2) verfahrbar sind.

7. Vorrichtung nach Anspruch 6, **dadurch gekennzeichnet, dass** die Fingerbleche (10) zumindest in Teilbereichen axial und radial verfahrbar gelagert sind.

8. Vorrichtung nach einem der Ansprüche 6 bis 7, **dadurch gekennzeichnet, dass** die Fingerbleche (10) auf den ganzen Umfang verteilt sind und sich bevorzugt einander in Umfangsrichtung überlappen.

9. Vorrichtung nach einem der Ansprüche 6 bis 8, **dadurch gekennzeichnet, dass** die Fingerbleche (10) mechanisch miteinander und bevorzugt mechanisch mit dem Wulstkernsetzer (9) gekoppelt sind.

10. Vorrichtung nach einem der Ansprüche 6 bis 9, **dadurch gekennzeichnet, dass** die Kernfixierung (8) aus einer Vielzahl von zumindest vier bevorzugt von zumindest acht auf den Umfang verteilten formstabilen Fixierungsmitteln ausgebildet ist, wobei die Fixierungsmittel bevorzugt durch einen elektrischen oder einen hydraulischen oder einen pneumatischen Antrieb, bevorzugt unter Verwendung einer mechanischen Übersetzung, antreibbar sind.

## Claims

1. Method for producing a pneumatic tyre with an inner layer (6), a carcass ply (7), a bead core (11), a tyre belt and with a tread, comprising the following steps:
a) placing the inner layer (6) and the carcass ply (7) onto a tyre-building drum (1) and onto a support ring (2) with a bladder (3),
b) forming tyre shoulders by expanding the tyre-building drum (1),
c) making the spacing of the inner layer (6) and the carcass ply (7) to the drum shoulder (12) more uniform by passing finger plates (10) over the shoulder region of the carcass ply (7),
d) setting a bead core (11) on the carcass ply (7) at the drum shoulder (12),
e) fixing the bead core (11) by way of a radially movable core-fixing means (8),
f) turning up the carcass ply (7) and the inner layer (6) around the bead core (11) by filling a bladder (3),
g) finishing the green tyre by way of further steps.

2. Method according to Claim 1, **characterized in that** making the spacing of the inner layer (6) and the carcass ply (7) to the drum shoulder (12) more uniform, at least in sub-regions of the inner layer (6), is reducing the spacing of the inner layer (6) and the carcass layer (7) in relation to the drum shoulder (12).

3. Method according to Claim 1 or 2, **characterized in that** the finger plates (10) are moved axially to the radially outer shoulder region of the carcass ply (7), and the finger plates (10) are subsequently moved, in the region of contact with the carcass layer (7), in a radial direction to a smaller diameter, wherein the radial movement is preferably driven by a bead-core setter (9).

4. Method according to one of the preceding claims, **characterized in that** the finger plates (10) are moved synchronously.

5. Method according to one of the preceding claims, **characterized in that** fixing of the bead core (11) by way of a radially movable core-fixing means (8) is realized by moving a multiplicity of at least four, preferably of at least eight, dimensionally stable fixing means distributed over the circumference, wherein the fixing means are preferably moved by way of an electrical or a hydraulic or a pneumatic drive, preferably using a mechanical transmission.

6. Device for producing a pneumatic tyre, in particular for carrying out a method according to one of Claims 1 to 5, having an expandable tyre-building drum (1) and a support ring (2) which is arranged axially in relation to the tyre-building drum (1) and has a bladder (3), wherein a core-fixing means (8) for bladder-free fixing of a bead core (11) to a carcass ply (7) is arranged on the support ring (2), **characterized in that** that the device has finger plates (10) for making the spacing of the inner layer (6) and the carcass ply (7) to the drum shoulder (12) more uniform, said finger plates being movable between a bead-core setter (9) and the bladder (3) on the support ring (2).

7. Device according to Claim 6, **characterized in that** the finger plates (10) are mounted so as to be axially and radially movable at least in sub-regions.

8. Device according to either of Claims 6 and 7, **characterized in that** the finger plates (10) are distributed over the whole circumference and preferably overlap one another in a circumferential direction.

9. Device according to one of Claims 6 to 8, **characterized in that** the finger plates (10) are coupled mechanically to one another and preferably mechanically to the bead-core setter (9).

10. Device according to one of Claims 6 to 9, **characterized in that** the core-fixing means (8) is formed from a multiplicity of at least four, preferably of at least eight, dimensionally stable fixing means distributed over the circumference, wherein the fixing means are preferably driveable by way of an electrical or a hydraulic or a pneumatic drive, preferably using a mechanical transmission.

## Revendications

1. Procédé de fabrication d'un pneumatique avec une couche intérieure (6), une nappe de carcasse (7), une tringle (11), une ceinture de pneu et une bande de roulement, avec les étapes suivantes :
a) pose de la couche intérieure (6) et de la nappe de carcasse (7) sur un tambour de fabrication (1) de pneu et sur un anneau de support (2) avec un soufflet (3),
b) réalisation d'épaulements de pneu par expansion du tambour de fabrication (1) de pneu;
c) uniformisation de la distance de la couche intérieure (6) et de la nappe de carcasse (7) par rapport à l'épaulement (12) de tambour en balayant la zone d'épaulement de la nappe de carcasse (7) avec des tôles à doigts (10),
d) placement d'une tringle (11) sur la nappe de carcasse (7) sur l'épaulement (12) de tambour,
e) fixation de la tringle (11) avec une fixation (8) de tringle pouvant être déplacée radialement,
f) repliage de la nappe de carcasse (7) et de la couche intérieure (6) autour de la tringle (11) en remplissant un soufflet (3),
g) achèvement de l'ébauche de pneu avec d'autres étapes.

2. Procédé selon la revendication 1, **caractérisé en ce que** l'uniformisation de la distance de la couche intérieure (6) et de la nappe de carcasse (7) par rapport à l'épaulement (12) de tambour est au moins dans des zones partielles de la couche intérieure (6) une réduction de la distance entre la couche intérieure (6) et la nappe de carcasse (7) par rapport à l'épaulement (12) de tambour.

3. Procédé selon les revendications 1 ou 2, **caractérisé en ce que** les tôles à doigts (10) sont déplacées axialement sur la zone d'épaulement radialement extérieure de la nappe de carcasse (7) et les tôles à doigts (10) sont déplacées en suivant dans la zone de contact avec la nappe de carcasse (7) dans la direction radiale sur un diamètre plus petit, le déplacement radial étant entraîné de manière préférée par un dispositif de réglage (9) de tringle.

4. Procédé selon l'une des revendications précédentes, **caractérisé en ce que** les tôles à doigts (10) sont déplacées de manière synchrone.

5. Procédé selon l'une des revendications précédentes, **caractérisé en ce que** la fixation de la tringle (11) est produite avec une fixation (8) de tringle axialement déplaçable par un déplacement d'une pluralité d'au moins quatre de manière préférée parmi au moins huit moyens de fixation de forme stable répartis sur la périphérie, les moyens de fixation étant déplacés de manière préférée par un entraînement électrique ou un entraînement hydraulique ou un entraînement pneumatique, de manière préférée en utilisant une démultiplication mécanique.

6. Dispositif de fabrication d'un pneumatique, en particulier pour exécuter un procédé selon l'une des revendications 1 à 5, comportant un tambour de fabrication (1) de pneu pouvant être expansé ainsi qu'un anneau de support (2) disposé axialement par rapport au tambour de fabrication (1) de pneu avec un soufflet (3), une fixation (8) de tringle destinée à fixer une tringle (11) sans soufflet sur une nappe de carcasse (7) étant disposée sur l'anneau de support (2), **caractérisé en ce que** le dispositif d'uniformisation de la distance de la couche intérieure (6) et de la nappe de carcasse (7) par rapport à l'épaulement (12) de tambour comporte des tôles à doigts (10), qui peuvent être déplacées entre un dispositif de réglage (9) de tringle et le soufflet (3) sur l'anneau de support (2).

7. Dispositif selon la revendication 6, **caractérisé en ce que** les tôles à doigts (10) sont montées de manière à pouvoir être déplacées axialement et radialement au moins dans des zones partielles.

8. Dispositif selon l'une des revendications 6 à 7, **caractérisé en ce que** les tôles à doigts (10) sont réparties sur la totalité de la périphérie et se chevauchent de manière préférée les unes les autres dans la direction périphérique.

9. Dispositif selon l'une des revendications 6 à 8, **caractérisé en ce que** les tôles à doigts (10) sont couplées mécaniquement les unes aux autres et de manière préférée mécaniquement au dispositif de réglage (9) de tringle.

10. Dispositif selon l'une des revendications 6 à 9, **caractérisé en ce que** la fixation (8) de tringle est réalisée à partir d'une pluralité d'au moins quatre de manière préférée parmi au moins huit moyens de fixation de forme stable répartis sur la périphérie, les moyens de fixation pouvant être entraînés de manière préférée par un entraînement électrique ou un entraînement hydraulique ou un entraînement pneumatique, de manière préférée en utilisant une démultiplication mécanique.
